# EUROPÄISCHE PATENTSCHRIFT

(11) **EP 0 555 790 B1**
(45) Veröffentlichungstag und Bekanntmachung des Hinweises auf die Patenterteilung: **01.05.1996**
(21) Anmeldenummer: 93101896.4
(22) Anmeldetag: 08.02.1993
(51) Int. Cl.: F16F 9/30, E04H 9/02

(54) **Horizontal und vertikal wirkender viskoser Schwingungsdämpfer**
Horizontally- and vertically-working viscous vibration damper
Amortisseur de vibrations visqueux à action horizontale et verticale

(30) Priorität: 12.02.1992 DE 4204127
(43) Veröffentlichungstag der Anmeldung: 18.08.1993
(73) Patentinhaber: GERB Schwingungsisolierungen GmbH & Co. KG, D-13362 Berlin (DE)
(72) Erfinder: Delam, Heinz, Ing., W-1000 Berlin 20 (DE); Weber, Frank-Michael, Dipl.-Phys., W-1000 Berlin 30 (DE)
(74) Vertreter: Vogeser, Werner, Dipl.-Ing.

(56) Entgegenhaltungen:
- WO-A-90/10802
- DE-A- 3 507 835
- US-A- 3 554 527
- Patent Abstracts of Japan vol. 12, no. 206(M-708)(3053) 14. Juni 1988 & JP-A- 63 9 740 (HITACHI PLANT) 16. Januar 1988

## Beschreibung

Die Erfindung betrifft einen horizontal und vertikal wirkenden viskosen Schwingungsdämpfer gemäß Oberbegriff des An spruchs 1.

Bekannt sind ganz allgemein Schwingungsdämpfer mit einem mit einer viskosen Flüssigkeit gefüllten zylindrischen Behälter und einem zylindrischen oder becherförmigen Dämpferstempel. Der Behälter wird mittels einer Bodenplatte an einem Festpunkt angebracht, während der Dämpferstempel über eine Deckplatte mit dem zu schützenden Objekt verbunden wird. Bei Relativbewegungen zwischen diesen Teilen entwickelt der Dämpfer Kräfte, die weitgehend proportional zur Geschwindigkeit dieser Bewegung sind. Dabei wird die Bewegungsenergie innerhalb des Dämpfungsmediums in Wärme umgesetzt, so daß eine wirksame Dämpfung des bewegten Systems erreicht werden kann.

Die wichtigste Kenngröße dieser Dämpfer ist der Dämpfungswiderstand W, der die Dämpferkraft F mit der Geschwindigkeit v nach der Formel F = W * v verbindet.

Derartige Dämpfer werden in sehr vielfältiger Weise eingesetzt. beispielsweise bei der Schwingungsisolierung im allgemeinen Maschinenbau sowie bei Erdbebenschutzsystemen.

Dämpfungskräfte werden in derartigen Schwingungsdämpfern durch Scherung des viskosen Dämpfungsmediums zwischen zwei benachbarten Flächen und durch Verdrängung des Dämpfungsmediums erzeugt. Sie sind in erster Näherung proportional zur Viskosität des Dämpfungsmediums.

Scherungskräfte sind proportional zur Scherfläche und umgekehrt proportional zum Abstand zweier benachbarter Flächen.

Bei den bisher üblichen Dämpfern bestehen die Scherflächen meist aus konzentrischen Zylindern oder Rohren mit viereckigem Querschnitt.

Bei einem aus WO 90/10802 bekannten Schwingungsdämpfer sind zwischen der Gehäuseumlaufwand und dem Dämpferstempel mehrere zylindrische Rohre konzentrisch zueinander angeordnet. Diese Rohre sind senkrecht zur Zylinderachse, d.h. horizontal frei verschiebbar und bewirken eine Erhöhung des Dämpfungswiderstandes W gegenüber einem Dämpfer gleicher Abmessungen ohne diese Rohre. Diese Erhöhung des Dämpfungswiderstandes wird aber nur dann erreicht, wenn die Bewegung der zu dämpfenden Schwingung senkrecht zur Zylinderachse erfolgt, da nämlich bei vertikalen Bewegungen nur eine begrenzte Wirkung erzielt werden kann.

Wenn bei derartigen Dämpfern große horizontale Relativbewegungen auftreten, wird das viskose Dämpfungsmedium am Rand des Dämpfergehäuses nach oben gedrückt; je nach Viskosität des Mediums und der jeweiligen Dämpfergeometrie kann das Medium nur relativ langsam zurückfließen. Legt man z.B. eine sinusförmige Anregung zugrunde, so wird mit jedem Lastzyklus das Dämpfungsmedium weiter nach oben gedrückt, wobei sich auch die beweglichen Rohre aufwärts bewegen. Die Wirkung des Dämpfers nimmt dabei rasch ab.

Der Erfindung liegt die Aufgabe zugrunde, einen Schwingungsdämpfer der eingangs angegebenen Gattung so auszubilden, daß bei möglichst einfacher Konstruktion eine möglichst hohe Dämpfung erreicht werden kann, und zwar unabhängig von der Beanspruchungsrichtung.

Diese Aufgabe wird erfindungsgemäß durch die im kennzeichnenden Teil des Anspruchs 1 angegebenen Merkmale gelöst.

Durch die erfindungsgemäße Ausbildung ist in vorteilhafter Weise die Möglichkeit geschaffen, bei in vertikaler wie in horizontaler Richtung gleichartiger bzw. gleichförmiger Gestaltungder Hohlkörper in beiden Richtungen gleichartige Dämpfungsverhalten zu gewährleisten, und zwar bei zugleich hoher Dämpfungswirkung.

Die Zwischenräume zwischen jeweils zwei aufeinanderfolgenden Hohlkörpern können entweder mit gleichem viskosen Medium oder mit verschiedenen viskosen Dämpfungsmedien wenigstens teilweise gefüllt sein. Hierdurch lassen sich die verschiedensten Dämpfungskennlinien realisieren.

Eine besonders vorteilhafte Ausführungsform besteht darin, daß die Hohlkörper eine kugelige Gestalt aufweisen. Hierdurch bieten die Hohlkörper sowohl in Horizontal- als auch in Vertikalrichtung dem Dämpfungsmedium gleichgroße Flächen zur Umströmung an, so daß tatsächlich eine identische Dämpfungswirkung in beiden Richtungen gewährleistet ist; denn aufgrund der kugeligen Ausbildung ist die Dämpfungskraft nahezu unabhängig von der Richtung der Relativbewegung zwischen dem Dämpferstempel und dem Dämpfergehäuse. Sie ist weiterhin nahezu unabhängig davon, ob der Dämpferstempel konzentrisch oder exzentrisch zum Dämpfergehäuse angeordnet ist. Im Prinzip Gleichartiges gilt auch für andere als kugelige rotationssymmetrische Gestaltungen der Hohlkörper.

Die Hohlkörper können aber auch durchaus im vertikalen und/oder horizontalen Schnitt vieleckige Hohlkörper sehr verschiedener Gestalt sein, wobei die Zahl der Ecken nicht begrenzt ist. Eine vorteilhafte Ausführungsform besteht darin, daß der Hohlkörper des Dämpferstempels und der wenigstens eine weitere Hohlkörper eine rhombusförmige Gestalt aufzuweisen.

Ferner können in Anpassung an besondere Einsatzfälle die vieleckigen Hohlkörper unten offen sein, nämlich immer dann, wenn keine Vertikalschwingungen zu dämpfen sind.

Eine weitere besonders vorteilhafte Ausgestaltung besteht darin, daß zwischen den Hohlkörpern bzw. zwischen dem äußersten Hohlkörper und dem Dämpfergehäuse elastische Zwischenglieder angeordnet sind, die im Ruhezustand des Dämpfers alle Bauteile des Dämpfers in einer konzentrischen Normalposition halten.

Im folgenden wird die Erfindung ausschließlich beispielhaft und unter Bezugnahme auf die Zeichnungen weiter ins Detail gehend beschrieben; in den Zeichnungen zeigen:
- Fig. 1: einen Vertikalschnitt durch einen Dämpfer einer ersten Ausführungsform,
- Fig. 2: einen Vertikalschnitt durch eine zweite Ausführungsform mit Hohlkörpern,
- Fig. 3: einen Vertikalschnitt durch die Ausführungsform der Fig. 2, mit weiteren Einrichtungen,
- Fig. 4: eine weitere Ausführungsform mit anders gestalteten Hohlkörpern,
- Fig. 5: einen Vertikalschnitt durch die Ausführungsform der Fig. 4, in anderer Bewegungsstellung und
- Fig. 6: eine weitere Ausführungsform.

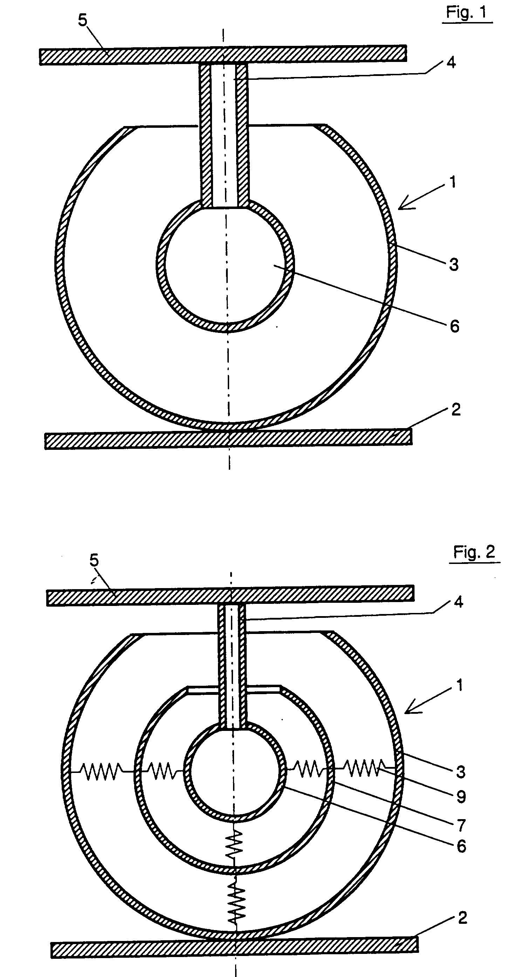

Der Dämpfer der Fig. 1 besteht aus einem Dämpfergehäuse 1 mit Bodenplatte 2 und Umlaufwand 3 und aus einem von oben in das Dämpfergehäuse 1 hineinragenden Dämpferstempel 4, wobei der Raum zwischen Dämpferstempel 4 und Dämpfergehäuse 1 mit einem viskosen Medium mindestens teilweise gefüllt ist. Das Dämpfergehäuse 1 bildet mit seiner Bodenplatte 2 einem Fixpunkt zur festen Anordnung des Dämpfers, während der Dämpferstempel 4 an einer oberen Deckplatte 5 befestigt ist, an der ein zu dämpfendes Objekt befestigt wird.

Am unteren Ende des Dämpferstempels 4 ist ein Hohlkörper 6 ausgebildet, der bei der gezeigten Ausführungsform 6 kugelig gestaltet ist, dessen äußere Gestalt aber insbesondere im wesentlichen der Gestalt der Innenfläche des Dämpfergehäuses 1 entspricht, welches seinerseits ebenfalls kugelig gestaltet ist.

Jede Bewegung des Dämpferstempels 4 zusammen mit dem Hohlkörper 6 in dem viskosen Dämpfungsmedium hat Scherungs- und Verdrängungskräfte zur Folge, die zur Dämpfung eines schwingenden Systems herangezogen werden. Aufgrund der kugeligen Ausbildung des Hohlkörpers 6 und auch des Dämpfergehäuses 1 ist die Dämpfungskraft nahezu unabhängig von der Richtung der Relativbewegung zwischen dem Hohlkörper 6 des Dämpferstempels 4 und des Dämpfergehäuses 1;. sie ist weiterhin nahezu unabhängig davon, ob der Hohlkörper 6 konzentrisch oder exzentrisch zum Dämpfergehäuse 1 installiert ist.

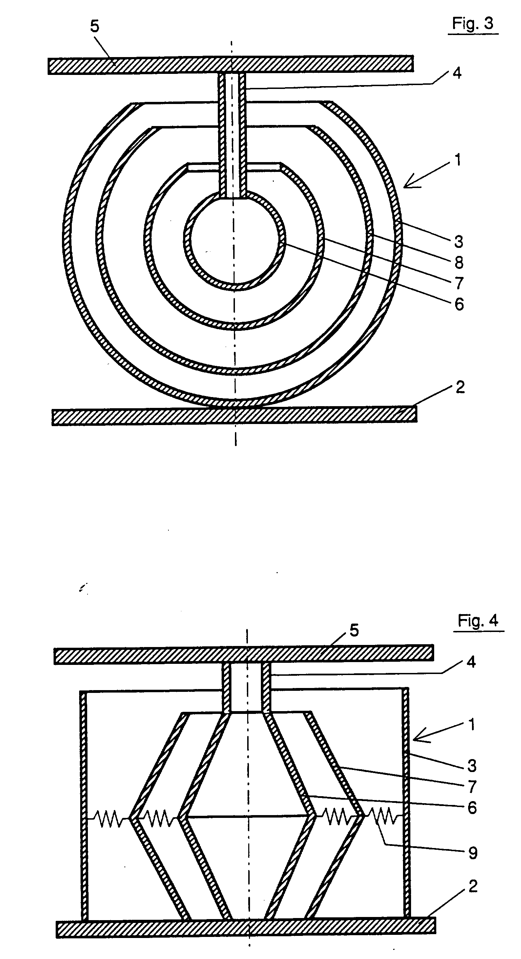

Da der Dämpfungswiderstand eines viskosen Dämpfers mit geringer werdendem Abstand benachbarter Scherflächen ansteigt, kann der Widerstand mit Hilfe weiterer gleichartig gestalteter Hohlkörper, die an ihrem oberen Ende einen Durchbruch für den Dämpferstempel 4 aufweisen, erhöht werden. Diese Möglichkeit ist in Fig. 3 dargestellt, wonach der Hohlkörper 6 von weiteren Hohlkörpern 7 und 8 umgeben ist, die eine solche Größe haben, daß aufeinanderfolgend Zwischenräume zwischen den jeweiligen Hohlkörpern gebildet sind. Der Durchmesser des Durchbruchs am oberen Ende der Hohlkörper muß größer als der Durchmesser des Dämpferstempels 4 und kleiner als der Durchmesser des Hohlkörpers 6 bzw. der Durchmesser des nächstgrößeren Hohlkörpers 7 bzw. 8 sein. So ist eine unbehinderte Vertikal- und auch eine unbehinderte Horizontalbewegung des Hohlkörpers 6 gewährleistet. Andererseits ist vermieden, daß die ineinander verschachtelten Hohlkörper 6, 7, 8 und 3 entkoppelt werden. Translatorische Bewegungen des Hohlkörpers 6 können dabei teilweise in Rotationsbewegungen der weiteren Hohlkörper 7 bzw. 8 umgewandelt werden; die Größe der Dämpfungskraft ist aber auch hiervon unabhängig.

Der Zwischenraum zwischen dem Hohlkörper 6 und dem nachfolgenden Hohlkörper 7, der Zwischenraum zwischen letzterem und dem nächsten äußeren Hohlkörper 8 sowie der Zwischenraum zwischen diesem und der Umlaufwand 3 können mit dem gleichen viskosen Dämpfungsmedium oder mit verschiedenen viskosen Dämpfungsmedien gefüllt werden, was davon abhängig ist, welche spezifische Dämpfungscharakteristik realisiert werden soll. Dies läßt sich auch durch entsprechende Wahl der Abstände zwischen aufeinander folgenden Hohlkörpern beeinflussen.

Die Ausführungsform nach Fig. 3 kann noch gemäß Fig 2 dadurch weiter ausgestaltet werden, indem man zwischen dem zentralen Hohlkörper 6 und dem nachfolgenden weiteren Hohlkörper 7 bzw. je zwei benachbarten Hohlkörpern 7 und 8 (bei der Ausführungsform nach Fig. 2) wahlweise elastische Zwischenglieder 9 vorsieht, die alle Hohlkörper bei unbelastetem Dämpfer in eine konzentrische Normalposition bringen.

Im allgemeinen ist dies jedoch wegen der weitgehenden Unabhängigkeit des Dämpfungswiderstandes von eventuellen Exzentrizitäten nicht unbedingt erforderlich. Auch wenn im Ruhezustand des Dämpfers sämtliche Hohlkörper soweit absinken, wie es die Führung durch den nächstkleineren Hohlkörper jeweils zuläßt, ergeben sich keine Änderungen im Dämpfungsverhalten.

Die Aufteilung des Raums zwischen der Umlaufwand des Gehäuses und dem Hohkörper des Dämpferstempels in mehrere Kammen, die durch die Zwischenräume zwischen den entsprechend vielen Hohlkörpern gebildet werden, verbessert die Dämpfungswirkung besonders bei großen Bewegungen, da jede Kammer nur einen Teil der Gesamtbewegung des Dämpferstempels aufnehmen muß.

In Fig. 4 ist eine weitere Ausführungsform gezeigt, die sich von den Ausführungsformen der Fig. 1 bis 3 in mehrfacher Hinsicht unterscheidet. Auch hier ist am unteren Ende des Dämpferstempels 4 ein Hohlkörper 6 ausgebildet, der im vertikalen und/oder horizontalen Schnitt die Gestalt eines Vielecks hat und speziell die eines Rhombus. Die Zahl der Ecken der Hohlkörper ist in keiner Weise eingeschränkt; ebensogut sind andere Gestalten der Hohlkörper möglich, beispielsweise quaderförmige, kubusförmige Gestalten usw. Der Hohlkörper kann aber in sogar zu bevorzugender Weise durchaus ein rotationssymmetrischer Hohlkörper sein, der bei Betrachtung der Fig. 4 ein solcher mit einer Unstetigkeitsstelle entlang eines Meridians ist.

In dem Zwischenraum zwischen dem zentralen Hohlkörper 6 und der Umlaufwand 3 ist gemäß Fig. 4 ein weiterer Hohlkörper 7 angeordnet, dessen Gestalt der des Hohlkörpers 6 entspricht.

Auch bei der Ausführungsform der Fig. 4 sind elastische Zwischenglieder 9 vorgesehen, die alle Bauteile im unbelasteten Zustand des Dämpfers in konzentrischer Normalposition halten.

Ein weiterer Unterschied dieser Ausführungsform gegenüber den Ausführungsformen der Fig. 1 bis 3 besteht darin, daß die Umlaufwand 3 des Dämpfergehäuses 1 eine andere Gestalt als die Hohlkörper 6, 7 aufweist. Bei der dargestellten Ausführungsform ist eine im wesentlichen zylindrische Gestalt der Umlaufwand 3 vorgesehen, obwohl für die Umlaufwand 3 auch andere Gestaltungen bspw. eine rhombusförmige Gestaltung in Frage kommen.

Die Ausführungsform der Fig. 4 kann vergleichsweise sehr viel einfacher hergestellt werden, besitzt aber ähnliche Dämpfungseigenschaften wie die Ausführungsformen der Fig. 1 bis 3.

Wenn, wie bei der Anwendung in Erdbebenschutzsystemen üblich, nur horizontale Bewegungen zu erwarten sind, können die Hohlkörper 6, 7 auf der Bodenplatte 2 des Dämpfergehäuses 1 aufliegen.

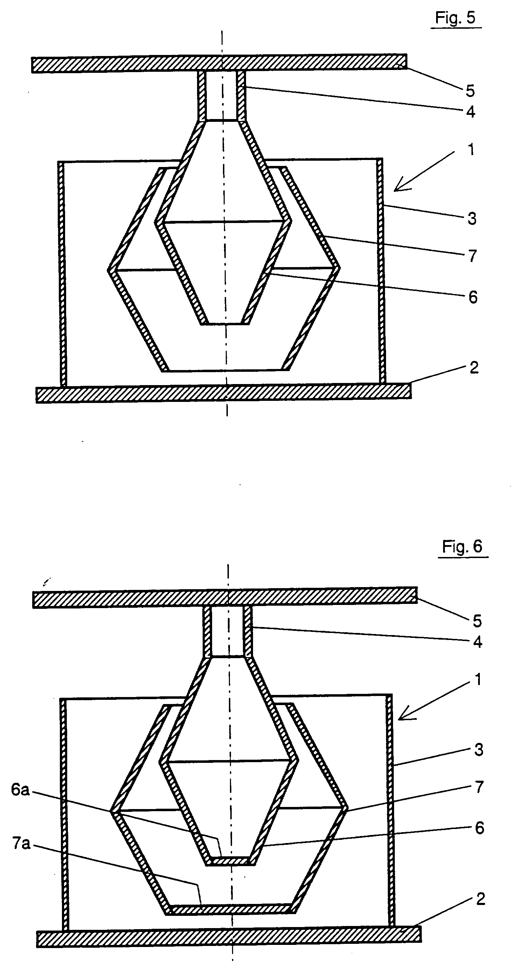

Fig. 5 zeigt die Ausführungsform der Fig. 4 in einer anderen vertikalen Bewegungsstellung, in der der Dämpferstempel 4 gegenüber der Bodenplatte 2 angehoben ist.

Schließlich zeigt Fig. 6 noch eine Ausführungsform ähnlich derjenigen der Fig. 4 bzw. 5. Am unteren Ende des Dämpferstempels 4 ist ein Hohlkörper 6 vorgesehen, der unten durch eine Bodenplatte 6a verschlossen ist. Der Hohlkörper 6 ist von einem größeren Hohlkörper 7 umgeben, der ebenfalls an seinem unteren Ende durch eine Bodenplatte 7a verschlossen ist.

Das Dämpfergehäuse 1 bzw. dessen Umlaufwand 3 ist auch bei diesem Ausführungsbeispiel zylindrisch gestaltet, wobei diese Gestalt keineswegs bedingungslos erforderlich ist. Bei der Ausführungsform der Fig. 6 sind die Hohlkörper 6, 7, 1 als nach unten geschlossene Einheiten ausgebildet, die zur Einstellung unterschiedlichster Dämpfungscharakteristiken mit verschiedenen Dämpfungsmedien gefüllt sein können.

Weiter besteht beispielsweise auch die Möglichkeit, zwischen einem zentralen Kohlkörper 6 des Dämpferstempels 4 und dem Dämpfergehäuse 1 eine beliebige Anzahl von weiteren Hohlkörpern anzuordnen, was von den jeweils gewünschten Dämpfungseigenschaften abhängig ist.

Auch können die Hohlkörper praktisch jede beliebige Anzahl von Ecken und Teilflächen aufweisen; auch kommt selbstverständlich neben der kugeligen Gestalt jede weitere irgendwie nichteckige Gestalt in Frage.

## Patentansprüche

1. Horizontal und vertikal wirkender viskoser Schwingungsdämpfer mit einem Dämpfergehäuse (1) und einem von oben in dieses hineinragenden Dämpferstempel (4), bei dem der Raum zwischen Dämpferstempel (4) und Dämpfergehäuse (1) mit viskosem Dämpfungsmedium mindestens teilweise gefüllt ist und mindestens zwei gleichförmige Hohlkörper (3, 6; 6, 7; 3, 6, 7; 3, 6, 7, 8) mit gegenseitigem Abstand ineinandergeschachtelt vorgesehen sind, wobei der innerste Hohlkörper (6) den eigentlichen Dämpfungskörper des Dämpferstempels (4) bildet, zwischen jeweils zwei benachbarten Hohlkörpern (6, 7; 7, 8; 8, 3) ein Zwischenraum gebildet ist und mit Ausnahme des innersten Hohlkörpers (6) jeder Hohlkörper (3; 6; 7; 8) an seinem oberen Bereich mindestens so weit offen ausgebildet ist, daß ein berührungsfreier Durchtritt eines den Hohlkörper (6) des Dämpferstempels (4) tragenden oberen Teils gewährleistet ist,
**dadurch gekennzeichnet, daß**
- der obere Teil als Stiel ausgebildet ist und
- der vertikale Querschnitt und der horizontale Querschnitt des jeweiligen Hohlkörpers (3; 6; 7; 8) gleichartige geometrische Form aufweisen, so daß das Dämpfungsmedium bei Bewegung der Hohlkörper (3; 6; 7; 8) unabhängig von deren Bewegungsrichtung jeweils im wesentlichen eine gleich große Dämpfungswirkung entfaltet.

2. Dämpfer nach Anspruch 1,
**dadurch gekennzeichnet, daß**
jeder außenseitig einen Hohlkörper umgebende Hohlkörper (3; 3, 7; 3, 8, 7) der genannten mindestens zwei gleichförmigen Hohlkörper an seinem oberen Bereich offen und zugleich soweit geschlossen ausgebildet ist, daß der von ihm umgebene Hohlkörper durch den offenen Bereich nicht hindurchführbar ist.

3. Dämpfer nach Anspruch 1 oder 2, **dadurch gekennzeichnet**, daß die Zwischenräume zwischen jeweils zwei aufeinander folgenden Hohlkörpern (6, 7; 7, 8; 8, 3) mit dem gleichen viskosen Dämpfungsmedium mindestens teilweise gefüllt sind.

4. Dämpfer nach Anspruch 1 oder 2, **dadurch gekennzeichnet**, daß die Zwischenräume zwischen jeweils zwei aufeinander folgenden Hohlkörpern (6, 7; 7, 8; 8, 3) mit unterschiedlichen viskosen Dämpfungsmedien mindestens teilweise gefüllt sind.

5. Dämpfer nach mindestens einem der vorausgehenden Ansprüche, **dadurch gekennzeichnet**, daß die Hohlkörper als zu ihrer Längsachse rotationssymmetrische Hohlkörper ausgebildet sind.

6. Dämpfer nach Anspruch 5, **dadurch gekennzeichnet**, daß die Hohlkörper (3, 6, 7, 8) eine kugelige Gestalt aufweisen.

7. Dämpfer nach Anspruch 5, **dadurch gekennzeichnet**, daß die äußere Umfangskontur der rotationssymmetrischen Hohlkörper mindestens eine Unstetigkeitsstelle aufweist.

8. Dämpfer nach Anspruch 5 oder 6, **dadurch gekennzeichnet**, daß der äußerste Hohlkörper (3) zugleich das Dämpfergehäuse bildet.

9. Dämpfer nach Anspruch 1, **dadurch gekennzeichnet**, daß die Hohlkörper als im vertikalen und/oder horizontalen Schnitt vieleckige Hohlkörper ausgebildet sind.

10. Dämpfer nach Anspruch 9, **dadurch gekennzeichnet**, daß die Hohlkörper im Vertikalschnitt eine rhombusförmige Gestalt aufweisen.

11. Dämpfer nach Anspruch 9 oder 10, **dadurch gekennzeichnet**, daß die vieleckigen Hohlkörper nach unten offen sind.

12. Dämpfer nach Anspruch 9 oder 10, **dadurch gekennzeichnet**, daß die vieleckigen Hohlkörper an ihrem unteren Ende geschlossen ausgebildet sind.

13. Dämpfer nach mindestens einem der vorausgehenden Ansprüche, **dadurch gekennzeichnet**, daß das Dämpfergehäuse zylindrisch gestaltet ist.

14. Dämpfer nach mindestens einem der vorausgehenden Ansprüche, **dadurch gekennzeichnet**, daß zwischen den Hohlkörpern (6, 7; 7, 8) und/oder zwischen dem äußeren Hohlkörper (6; 7; 8) und dem Dämpfergehäuse (1) elastische Zwischenglieder (9) angeordnet sind, die im Ruhezustand des Dämpfers alle Bauteile in einer konzentrischen Normalposition halten.

15. Dämpfer nach mindestens einem der vorausgehenden Ansprüche, **dadurch gekennzeichnet**, daß die Abstände zwischen jeweils zwei einander benachbarten Hohlkörper unterschiedlich groß sind.

16. Dämpfer nach mindestens einem der Ansprüche (1 bis 14), **dadurch gekennzeichnet**, daß mindestens zwei Abstände zwischen zwei jeweils einander benachbarten Hohlkörpern gleich groß sind.

## Claims

1. A horizontally and vertically acting viscous vibration damper comprising a damper housing (1) and a damper ram (4) which extends into the damper housing from above, wherein the space between the damper ram (4) and the damper housing (1) is at least partially filled with viscous damping medium, and there are provided at least two hollow bodies (3, 6; 6, 7; 3, 6, 7; 3,6, 7, 8) of the same shape which are encapsulated one within the other at a spacing from each other, wherein the innermost hollow body (6) forms the actual damping body of the damper ram (4), an intermediate space is formed between each two adjacent hollow bodies (6, 7; 7, 8; 8, 3) and with the exception of the innermost hollow body (6) each hollow body (3; 6; 7; 8) is at least so wide open at its upper region as to ensure that an upper part carrying the hollow body (6) of the damper ram (4) passes through without making contact,
characterised in that
- the upper part is in the form of a post and
- the vertical cross-section and the horizontal cross-section of the respective hollow body (3; 6; 7; 8) are of similar geometrical shape so that upon movement of the hollow bodies (3; 6; 7; 8), irrespective of the respective direction of movement thereof, the damping medium develops substantially a damping action of the same magnitude.

2. A damper according to claim 1 characterised in that each hollow body (3; 3, 7; 3, 8, 7), which surrounds a hollow body on the outside, of said at least two hollow bodies of the same shape, is open at its upper region and at the same time is closed to such an extent that the hollow body surrounded thereby cannot be passed through the open region.

3. A damper according to claim 1 or claim 2 characterised in that the intermediate spaces between each two successive hollow bodies (6, 7; 7, 8; 8, 3) are at least partially filled with the same viscous damping medium.

4. A damper according to claim 1 or claim 2 characterised in that the intermediate spaces between each two successive hollow bodies (6, 7; 7, 8; 8, 3) are at least partially filled with different viscous damping media.

5. A damper according to at least one of the preceding claims characterised in that the hollow bodies are in the form of hollow bodies which are rotationally symmetrical in relation to their longitudinal axis.

6. A damper according to claim 5 characterised in that the hollow bodies (3, 6, 7, 8) are of a spherical configuration.

7. A damper according to claim 5 characterised in that the outer peripheral contour of the rotationally symmetrical hollow bodies has at least one location of non-uniformity.

8. A damper according to claim 5 or claim 6 characterised in that the outermost hollow body (3) at the same time forms the damper housing.

9. A damper according to claim 1 characterised in that the hollow bodies are in the form of hollow bodies which are polygonal in vertical and/or horizontal section.

10. A damper according to claim 9 characterised in that the hollow bodies are of a rhombic configuration in vertical section.

11. A damper according to claim 9 or claim 10 characterised in that the polygonal hollow bodies are downwardly open.

12. A damper according to claim 9 or claim 10 characterised in that the polygonal hollow bodies are of a closed configuration at their lower ends.

13. A damper according to at least one of the preceding claims characterised in that the damper housing is of a cylindrical configuration.

14. A damper according to at least one of the preceding claims characterised in that arranged between the hollow bodies (6, 7; 7, 8) and/or between the outer hollow body (6; 7; 8) and the damper housing (1) are resilient intermediate members (9) which in the rest condition of the damper hold all components in a concentric normal position.

15. A damper according to at least one of the preceding claims characterised in that the spacings between each two mutually adjacent hollow bodies are different.

16. A damper according to at least one of claims 1 to 14 characterised in that at least two spacings between two respective mutually adjacent hollow bodies are the same.

## Revendications

1. Amortisseur d'oscillations visqueux, agissant horizontalement et verticalement, comprenant un boîtier d'amortisseur (1) et un piston d'amortisseur (4) qui s'engage dans ce boîtier par le haut, dans lequel l'espace compris entre le piston (4) de l'amortisseur et le boîtier (1) de l'amortisseur est rempli au moins partiellement d'un milieu d'amortissement visqueux, et il est prévu au moins deux corps creux de même forme (3, 6 ; 6, 7 ; 3, 6, 7 ; 3, 6, 7, 8) emboîtés l'un dans l'autre à un certain écartement mutuel, le corps creux extrême intérieur (6) formant le corps d'amortissement proprement dit du piston d'amortisseur (4), tandis qu'un espace intermédiaire est formé entre deux corps creux adjacents (6, 7 ; 7, 8 ; 8, 3) et qu'à l'exception du corps creux extrême intérieur (6), chaque corps creux (3 ; 6 ; 7 ; 8) est ouvert, dans sa région supérieure, au moins assez largement pour permettre à une partie supérieure qui porte le corps creux (6) du piston (4) de l'amortisseur de le traverser sans le toucher,
caractérisé
en ce que la partie supérieure est constituée par une tige, et
- la section verticale et la section horizontale du corps creux considéré (3 ; 6 ; 7 ; 8) présente une forme géométrique analogue, de sorte que, lors du déplacement des corps creux (3 ; 6 ; 7 ; 8), le milieu d'amortissement développe une action d'amortissement sensiblement analogue indépendamment de la direction du déplacement de ces corps.

2. Amortisseur selon la revendication 1,
caractérisé en ce que chaque corps creux (3 ; 3, 7 ; 3, 8, 7) des au moins deux corps creux de même forme précités qui entourent extérieurement un corps creux est ouvert dans sa région supérieure et, en même temps suffisamment refermé pour que le corps creux qu'il entoure ne puisse pas passer à travers la région ouverte.

3. Amortisseur selon la revendication 1 ou 2,
caractérisé en ce que les espaces intermédiaires entre deux corps creux (6, 7 ; 7, 8 ; 8, 3) qui se succèdent sont remplis au moins partiellement du même milieu d'amortissement visqueux.

4. Amortisseur selon la revendication 1 ou 2, caractérisé en ce que les espaces intermédiaires entre deux corps creux (6, 7 ; 7, 8 ; 8, 3) qui se succèdent sont remplis au moins partiellement de milieux d'amortissement visqueux différents.

5. Amortisseur selon au moins une des revendications précédentes, caractérisé en ce que les corps creux sont constitués par des corps creux possédant une symétrie de révolution autour de leur axe longitudinal.

6. Amortisseur selon la revendication 5, caractérisé en ce que les corps creux (3, 6, 7, 8) présentent une configuration sphérique.

7. Amortisseur selon la revendication 5, caractérisé en ce que le contour périphérique extérieur des corps creux ayant une symétrie de révolution présente au moins une zone d'irrégularité.

8. Amortisseur selon la revendication 5 ou 6, caractérisé en ce que le corps creux extrême extérieur (3) forme en même temps le boîtier de l'amortisseur.

9. Amortisseur selon la revendication 1, caractérisé en ce que les corps creux forment des corps creux polygonaux en coupe verticale et/ou en coupe horizontale.

10. Amortisseur selon la revendication 9, caractérisé en ce que le corps creux présente une forme de losange en coupe verticale.

11. Amortisseur selon la revendication 9 ou 10, caractérisé en ce que les corps creux polygonaux sont ouverts vers le bas.

12. Amortisseur selon la revendication 9 ou 10, caractérisé en ce que les corps creux polygonaux sont fermés à leur extrémité inférieure.

13. Amortisseur selon au moins une des revendications précédentes, caractérisé en ce que le boîtier de l'amortisseur est de configuration cylindrique.

14. Amortisseur selon une des revendications précédentes, caractérisé en ce qu'entre les corps creux (6, 7 ; 7, 8) et/ou entre le corps creux extérieur (6 ; 7 ; 8) et le boîtier (1) de l'amortisseur, sont disposés des organes intermédiaires élastiques (9) qui maintiennent tous les éléments dans une position normale concentrique dans l'état de repos de l'amortisseur.

15. Amortisseur selon au moins une des revendications précédentes, caractérisé en ce que les écartements entre deux corps creux adjacents sont différents.

16. Amortisseur selon au moins une des revendications 1 à 14, caractérisé en ce qu'au moins deux distances d'écartement entre deux corps creux mutuellement adjacents sont égales.
